# EUROPEAN PATENT SPECIFICATION

(11) **EP 2 272 021 B1**
(45) Date of publication and mention of the grant of the patent: **27.07.2016**
(21) Application number: 09738427.5
(22) Date of filing: 29.04.2009
(51) Int. Cl.: G06F 21/32, G06F 21/62

(54) **SECURE DATA CACHE**
SICHERER DATENZWISCHENSPEICHER
MÉMOIRE CACHE DE DONNÉES SÉCURISÉE

(30) Priority: 29.04.2008 GB 0807753
(43) Date of publication of application: 12.01.2011
(73) Proprietor: Cryptomathic Ltd, Cambridge, Cambridgeshire CB4 0WG (GB)
(72) Inventor: BOND, Michael, Cambridgeshire CB4 0WG (GB)
(74) Representative: Gwilt, Julia Louise
(86) International application number: PCT/GB2009/050438
(87) International publication number: WO 2009/133397

(56) References cited:
- WO-A-02/103496
- DE-A1-102006 037 879
- US-A1- 2004 153 458
- SCHNEIER: "Cryptographic protection of databases" APPLIED CRYPTOGRAPHY, XX, XX, 1 January 1996 (1996-01-01), pages 73-74, XP002958299
- JAAP-HENK HOEPMAN ET AL: "Crossing Borders: Security and Privacy Issues of the European e-Passport" ADVANCES IN INFORMATION AND COMPUTER SECURITY LECTURE NOTES IN COMPUTER SCIENCE;;LNCS, SPRINGER, BERLIN, DE, vol. 4266, 1 January 2006 (2006-01-01), pages 152-167, XP019047433 ISBN: 978-3-540-47699-3
- FOURNEL T ET AL: "Self-encryption for paper document authentication" JOURNAL OF PHYSICS: CONFERENCE SERIES, INSTITUTE OF PHYSICS PUBLISHING, BRISTOL, GB, vol. 77, no. 1, 1 July 2007 (2007-07-01), page 12007, XP020125229 ISSN: 1742-6596

## Description

### Field of invention

This invention is generally concerned with methods, apparatus and computer program code for securely caching data, in particular for storing private and/or security sensitive data, such as biometric data from electronic identity documents.

### Background

Electronic identity documents are physical ID documents augmented with electronically stored information, for example, augmented with smartcard chips with contacted or contactless interfaces. Examples include ePassports, national ID cards, driving licences and health cards. The smartcard chip may perform a variety of functions including authenticating the users identity, providing counterfeit resistance, and storage of data. Crucially, many electronic identity schemes use smartcard chips with storage as a distributed database of personal and biometric data for the identity card holder. Each card could store up to 80KB of data.

The International Civil Aviation Organisation (ICAO) has produced a set of specifications for storage of biometric data on Machine Readable Travel Documents (MRTD), formatted in a way which protects their integrity with a digital signature from the issuing authority. The format of the stored data and associated meta-information comprises the ICAO "Logical Data Structure" (LDS).

Whilst there are many advantages of using a smartcard system as a distributed database, there are also drawbacks. In particular, it is time consuming to read data from smartcard chips due to the limitations on bandwidth of the contactless interface. It can take in excess of ten seconds to read biometric data groups from an electronic identity document. With poorly matched chip and reader software, it may take in excess of 20 seconds. Even the contact interface to a smartcard does not support particularly high data rates, and the amount of personal and biometric data that may need to be stored is rapidly growing as different biometric schemes (fingerprint, iris etc) compete to become established.

An alternative to a smart chip based scheme for identity documents is to maintain a central store of data. Public key technology is straightforward to apply in either scenario to allow verifiers to check the integrity of data retrieved from the central store. However for the store itself there are considerable security and privacy concerns. Additionally there are connectivity issues to consider, when identity documents must be verified in remote environments, or if the central database suffers communication failure.

The content of such databases would need to be subject to data protection laws, and is liable to abuse and perversion of purpose (legal use for a purpose other than the original reason for which it was originally collected). Whilst states are free to pursue their own central biometric collection programs, the EU has required that the sensitive biometric data retrieved from EU passports by member states must not be stored by inspection systems.

Methods of creating encrypted stores of data are known from WO98/47259 and US6577735. "Cryptographic protection of databases" in Applied Cryptography (XP002958299) describes encryption of a membership database using data from the membership database. "Crossing Borders: Security and Privacy Issues of the European e-Passport" by Hoepman et al (XP19047433) describes schemes for improving security of e-passports.

### Statements of the invention

According to one aspect of the invention, there is provided a method of securely caching data stored in an electronic identity document according to claim 1.

According to another aspect of the invention, there is provided a caching system according to claim 9.

Use of such a cache dramatically speeds up the inspection process, by bypassing the need to read data entirely, except for during the first inspection. The above method and caching system create an encrypted cache of biometric data where each entry may only be accessed in the presence of the original identity document from which it was sourced. The use of such an encrypted cache represents a viable middle ground between a fully distributed scheme in which no data is stored and a fully centralised scheme in which all data is stored centrally. Local caching of data may occur for data that has been read from identity documents, on local, national or even international level.

The data may be stored in the cache under a pseudonym or anonymous identifier whereby said data is not personally identifiable in the cache. The identifier may be considered a lookup key to the data in that it enables an inspection system to look-up the data but the identifier is not intended to be a cryptographic key. Only part of the data may be stored in the cache, for example, the head of each data file may be omitted. In this way, it would be infeasible to retrieve the data without access to the original document.

Said electronic document may comprise summary data, i.e. a file summarising the data stored therein. Said summary data may include cryptographic hashes of other data stored, or a digital signature and all or part of said summary data may be used to calculate a unique cryptographic key for said biometric data. For example, a key derivation function may be applied to this summary data to generate a secure key for encrypting data from the passport. Such a key may only be recreated from the summary data only when the electronic document is present. An identifier derivation function may also be applied to this summary data to generate an identifier for the data.

Said biometric data may comprise facial information and/or fingerprint data and all or part of said summary data, e.g. digital signature, may be used to calculate a unique cryptographic key for said biometric data.

For example, the electronic identity document may be an ICAO-compliant EU electronic passport, which may contain sixteen different data groups of biometric (e.g. facial, fingerprint and/or iris information), biographical and additional information, such as signature data. Any and/or all of these data groups may be cached. Such passports also comprise summary data in the form of a "Document Security Object" (SO_{D}) which is a sort of "summary file" containing a digital signature. The SO_{D} protects the integrity of the information stored on the ePassport and is read before any large data groups are read from an ePassport. The SO_{D} contains high entropy unpredictable data, and thus the unique cryptographic key may be derived from the document security object, .e.g. from the digital signature.

Said unique cryptographic key may be a hash value. Encrypting all or part of said data may comprise salting said data. Deriving a hash value and salting are standard cryptographic techniques. A hash function is a transformation that takes an input and returns a fixed size string which is called the hash value. The hash value may be a concise representation of a longer message or document from which it is computed and is thus sometimes termed a "message digest". The message digest is a sort of digital fingerprint of the larger document since it is unique to that document. In cryptography, a salt comprises random bits that are used as one of the inputs to a cryptographic operation, in order to increase the entropy of the input.

In the specific example, of ePassports, the SO_{D} includes hashes of biometric data and the digital signature itself. These hashes may be used to calculate said unique cryptographic key, e.g. half of the hash value may be salted and then hashed using standard best-practice cryptographic techniques.

Some of the data stored in an electronic document may be protected by other mechanisms to prevent unauthorised access to such data. Accordingly, it may not be sufficient to use summary information to calculate the unique cryptographic key since such information effectively caches the result of authorised access for the data. In such circumstances, part of the data itself, e.g. the head of the actual file for the data, may be used to create the unique cryptographic key for the data. In this way, a document issuer can always revoke access to the access controlled data (assuming that the document issuer effectively audits that the secure data cache is properly implemented).

For example, fingerprint data in EU passports is protected from unauthorised access via a security mechanism in the EAC suite called "Terminal Authentication", which requires an inspection system to demonstrate that it is authorised to recover the data. If the hash of the fingerprint data stored in the SO_{D} is used to calculate the unique cryptographic key, this hash is always available to an ePassport inspector without undergoing the terminal authentication process. Therefore storing fingerprint data using only the electronic signature in effect caches the (successful) result of terminal authentication. Thus, even if terminal authentication is withdrawn from the inspection system, it is still able to access the fingerprint data. In this example, the biometric data, i.e. fingerprint data, is in the form of an image and the unique cryptographic key for said image may be calculated using part of said image alone or in combination with said electronic signature.

According to another aspect of the invention, there is provided a method of retrieving data as set out in claim 6.

In other words, the data (except that needed to create the key) on the electronic document is retrieved from the secure data cache and not from the document itself. As explained above, this dramatically speeds up the time required to access the data on the document. It is possible to bypass the need to read all the data, except during the first inspection of the document, i.e. during the creation of the data cache.

According to another aspect of the invention, there is provided a method of verifying or inspecting an electronic document as set out in claim 7.

According to another aspect of the invention, there is provided a data retrieval system for retrieving information as set out in claim 12.

According to another aspect of the invention, there is provided a verification system for verifying an electronic document as set out in claim 13.

The verification system may be associated with a secret cryptographic key known only the verification system itself and this secret cryptographic key may be incorporated into the calculation to derive the unique cryptographic key for the data.

The invention further provides processor control code to implement the above-described methods, for example on a general purpose computer system or on a digital signal processor (DSP). The code may be provided on a carrier such as a disk, CD- or DVD-ROM, programmed memory such as read-only memory (Firmware). Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (Trade Mark) or VHDL (Very high speed integrated circuit Hardware Description Language). As the skilled person will appreciate such code and/or data may be distributed between a plurality of coupled components in communication with one another.

### Brief Description of the drawings

Figure 1 is a block diagram overview of an inspection system incorporating a secure data cache;
Figure 2 is a variation of Figure 1 for use in an inspection system used in ePassport applications;
Figure 3 illustrates calculation of a unique cryptographic key for data in the ePassport of Figure 2,
Figure 4 is a schematic diagram showing how local, national and international inspection systems communicate with a secure data cache,
Figure 5 shows a schematic diagram of the components of an inspection system of Figure 1 or Figure 2, and
Figure 6 is a flow chart of the steps in creating a secure data cache, retrieving information therefrom and verifying a document.

### Detailed description of the drawings

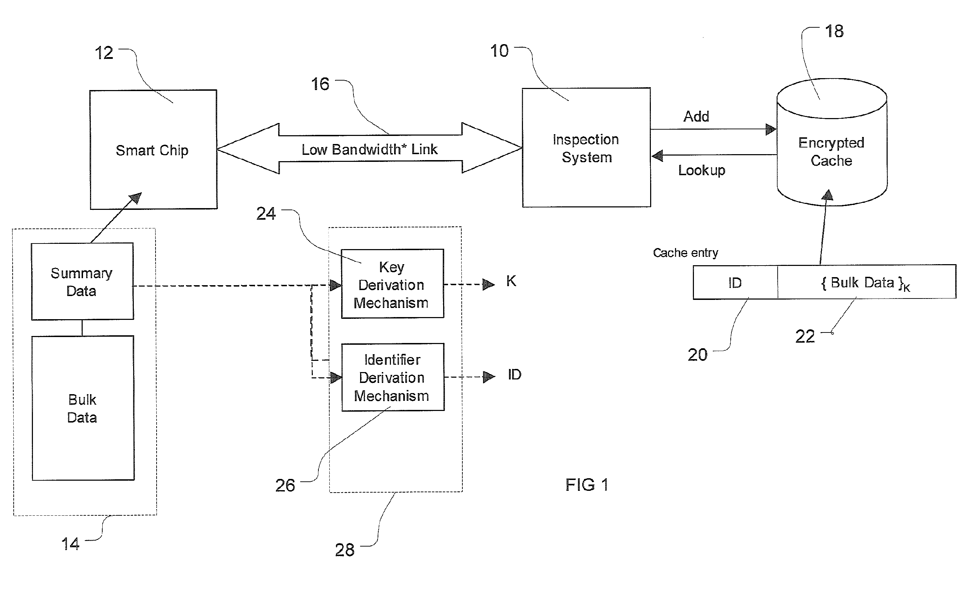

Figure 1 shows an inspection system 10 for inspecting an electronic document containing a smart chip 12 on which data 14 including summary data and bulk data is stored. The smart chip 12 may have a contacted or contactless interface. The inspection system accesses electronic data held on the smart chip 12 by standard technology which is currently a low bandwidth link 16. Low bandwidth means low bandwidth in proportion to the amount of data than must be transmitted.

The inspection system 10 is also connected to a secure data cache 18 which may be local to the inspection system or may be a shared cache to which the inspection system is connected, e.g.. by an online connection. Each entry in the cache comprises an identifier ID 20 and the encrypted bulk data {bulk data}_{K} 22encrypted using a unique cryptographic key K. The communication between the inspection system 10 and the secure data cache 18 is a two-way link so that the inspection system can add entries to the cache and lookup information stored in the cache.

As represented by dotted lines, both the identifier ID and unique cryptographic key K used to encrypt the data are derived from the summary data held on the smart chip. The key is derived using a key derivation mechanism 24 which may be a hash function or other standard cryptographic function applied to the summary data. Similarly, the identifier is derived using an identifier derivation mechanism 26 which may apply a hash function or other similar function to the summary data. Both the key and identifier derivation mechanisms are part of a processor 28 which may be local to or remote from the inspection system.

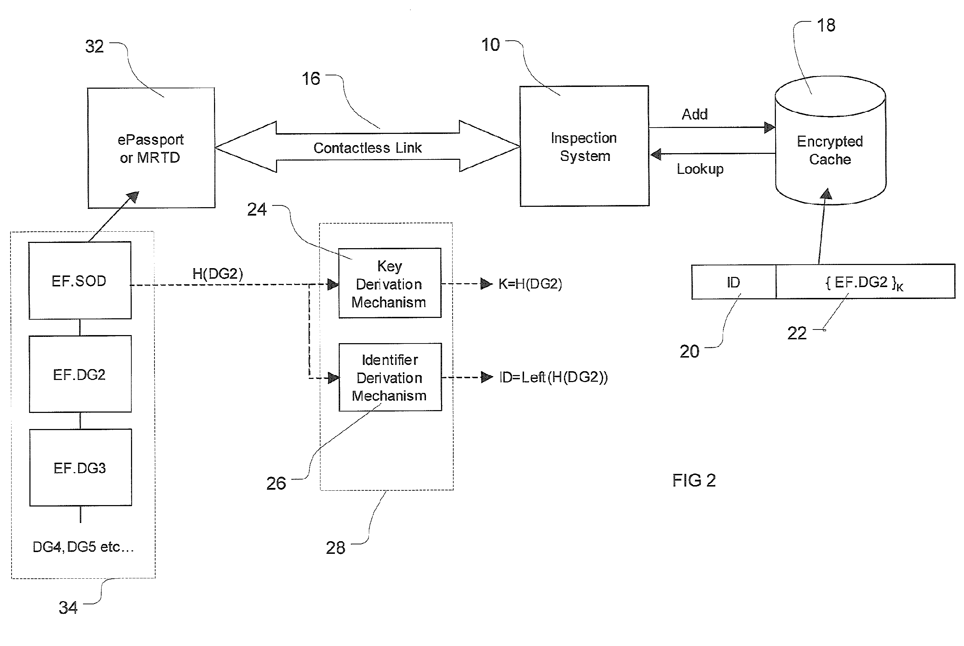

In Figure 2, the system of Figure 1 has been adapted for the example of an ICAO-compliant EU electronic passport 32. The data 34 stored on such a passport 32 contains sixteen different groups of biometric, biographical and additional information. Two of the large biometric data groups to be stored on EU Extended Access Control (EAC) compliant ePassports are:
Data Group 2 (DG2) - Facial Information
Data Group 3 (DG3) - Fingerprint Information

Before these large data groups are read from an ePassport., the "Document Security Object" (SO_{D}) is first read. The "Document Security Object" (SO_{D}) is a sort of "summary file" which contains a digital signature and protects the integrity of the information stored on the ePassport. As the summary file contains high entropy unpredictable data, including hashes of biometric data and the digital signature itself, a key derivation function can be applied to this data to generate a secure key for encrypting data from the passport. Such a key could only be recreated in possession of the summary file.

In the specific example of ePassports, the hash values calculated over each data group can be used as cryptographic keys to encrypt the data group bulk data before caching it. The hash values can also be used as a pseudonym or identifier in order to prevent the data group from being personally identifiable in the database.

In one particular example, DG2 may be securely stored by dividing the hash of the data H(DG2) in half. The first half is used as an identifier ID=left (H(DG2)) to a (non-cryptographic) hash table in order to store the data group. The data group is then encrypted using a cryptographic key derived from the second half of the hash, i.e. K=right(H(DG2)). Standard best-practice cryptographic techniques are used for such encryption, including salting. Example rows in a cache table would contain the following lookup key or identifier and encrypted data:

| | |
|---|---|
| left(hash(DG2)) | encrypt( right(hash(DG2)) , salt∥DG2 ) |

In this way, only in possession of the real ePassport (whose Document Security Object contains the hashes of the data groups) can one calculate the key and decrypt the data group. It is infeasible to predict the value of this hash of a biometric data group, even knowing the identity of the citizen from which the data groups have been made. The data is typically a JPEG file, WSQ image or similar image file and such image files are highly redundant encodings from a semantic perspective. Accordingly, they contain a lot of unpredictable data and thus have high entropy.

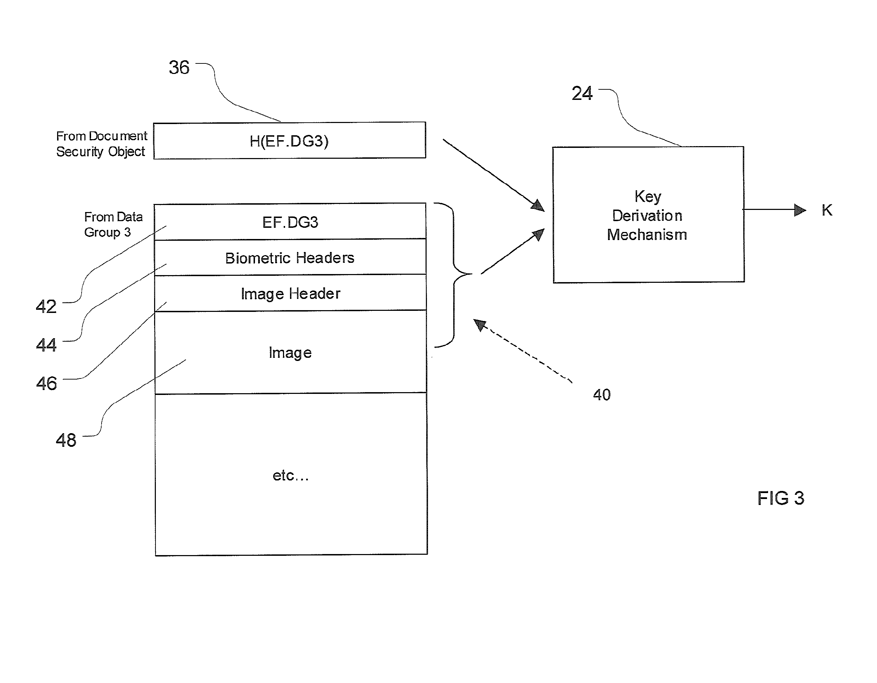

Some smartcard data that an inspection might want to cache is protected by access control mechanisms. For example, fingerprint data in EU passports is stored in data group 3 (DG3) and is protected from unauthorised access via a security mechanism in the EAC suite called "Terminal Authentication", which requires an inspection system to demonstrate that it is authorised to recover the data. However, the hash of the fingerprint data is available to an ePassport inspector in the document security object without undergoing the terminal authentication process. Therefore storing fingerprint data using the above scheme in effect caches the (successful) result of terminal authentication. In cases where the access control mechanism could be bypassed after the first successful access, Figure 3 shows how the key derivation mechanism 24 derives key K.

The hash of the data H(EF.DG3) 32 which is available from the document security object is combined with the head of the actual file. It is important to include a large enough head of the file 40 in order to subsume adequate high entropy data into the hash. The amount of head used must extend over the file header 42, the biometric CBEFF headers 44 and image headers 46 and part of the image itself 48. Thus, high entropy data from a summary file which is not subject to access control together with the head of the actual file itself which is subject to access control are used as an input to the key derivation function.

The first couple of hundred bytes of the fingerprint data group are concatenated with the hash of DG3 to make a key which can only be recreated after performing the proper access control procedure. Therefore a document issuer can always revoke another country's access to the access controlled data (assuming that the document issuer effectively audits that the inspector is properly implementing the scheme). In this example, the cache table would contain rows of the following form:

| | |
|---|---|
| left(hash(DG3)) | encrypt( hash(head(DG3)), salt∥DG3 ) |

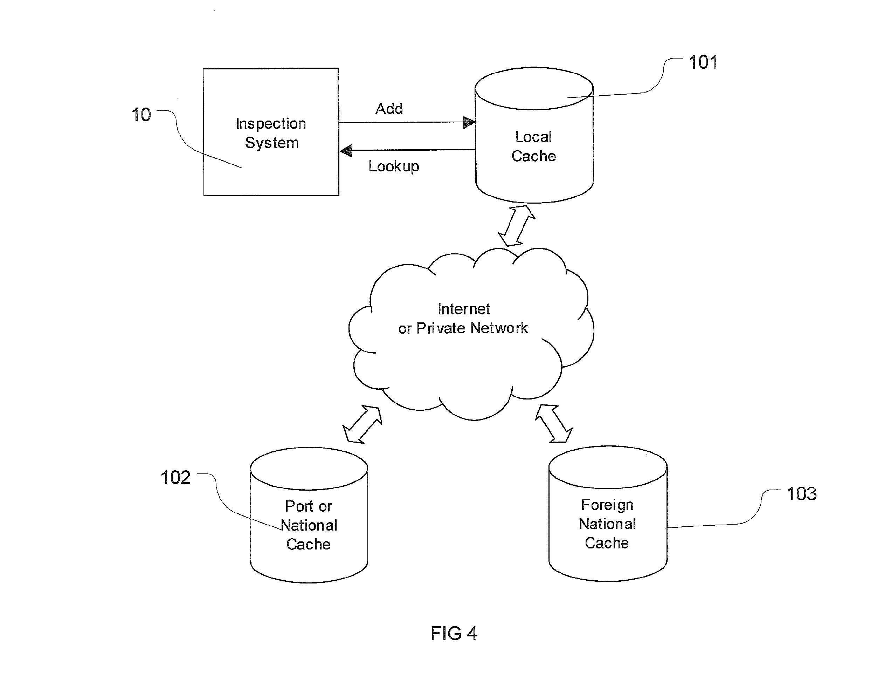

Figure 4 illustrates how the inspection system 10 may be connected to one or more secure data caches. The inspection system may communicate with a secure data cache in the form of a local cache 101 embedded in the inspection system itself. The inspection system may communicate with an external cache, e.g. a port or national cache 102 or an International cache 103, via the Internet or a private network using standard techniques. For the external caches 102,103, there may be synchronisation over networks to add data to the caches.

Feasibility of such a cache scheme, particularly for offline devices, depends on the storage requirements for data retrieved from the smart chip. To demonstrate the feasibility, take for example the data typically stored on an EU EAC electronic passport:
Facial Image 20KB
Fingerprint Images 15KB each (usually two)

This gives a typical maximum of 50KB of data per passport holder. To store a database of encrypted biometric data for 200 million travellers will require 50KB * 200 million = 9.3 terabytes. In practice the distribution of frequency of travel for passport holders is rather skewed. Accordingly, the available cache space can be chosen based on storage prices and operational concerns, with the space in the cache allocated to the most frequent users. There is a wealth of appropriate cache population and replacement algorithms. Multi-layered caching can be performed between local inspection systems, ports-of-entry, national regions or even with international cooperation using synchronisation over the networks.

For portable inspection systems which cannot access external caches via wireless connectivity, a local cache 101 of the most frequent 100,000 travellers' encrypted biometrics could easily be loaded onto a 4GB flash storage card.

Note again that the cache contains no personally identifiable information, and although it contains encrypted data, once the key is discarded this data is effectively deleted. The actual data is conceptually no more retained on the system than a RAM copy of a biometric is once the power to a PC is switched off.

Two further mechanisms can be used to reduce cache storage requirements, and to control distribution and use of the cache (should a cache creator not wish to share their cache data). First, as the head of each access-controlled data group is read out for inclusion in the storage key derivation process, this head need not be included in the cache entry itself, thus saving several hundred bytes per biometric record (a small saving such as this is magnified when records for billions of passport holders are stored). It also further demonstrates the impossibility of retrieving the biometric data without access to the original document - as some of it is entirely missing.

Second, a secret cryptographic key known only to valid inspection systems can be incorporated as an input to the key derivation function during construction of cache entries and upon retrieval. This makes it impossible for third parties to gain speed-up from accessing cache data without operating an approved inspection system.

Finally, there have been some concerns that if nations need to move to ten fingerprint biometric systems, whilst DG3 three can easily store many more images, it is the entire data group which is hashed, and not individual parts of it. This means that if an inspector desires only to read out the two index fingerprints out of a larger set, the integrity of these images cannot be assured without reading out the entire set. Reading out a ten fingerprint set via a contactless interface could take more than 60 seconds, so the advantages of caching in this context are even further magnified.

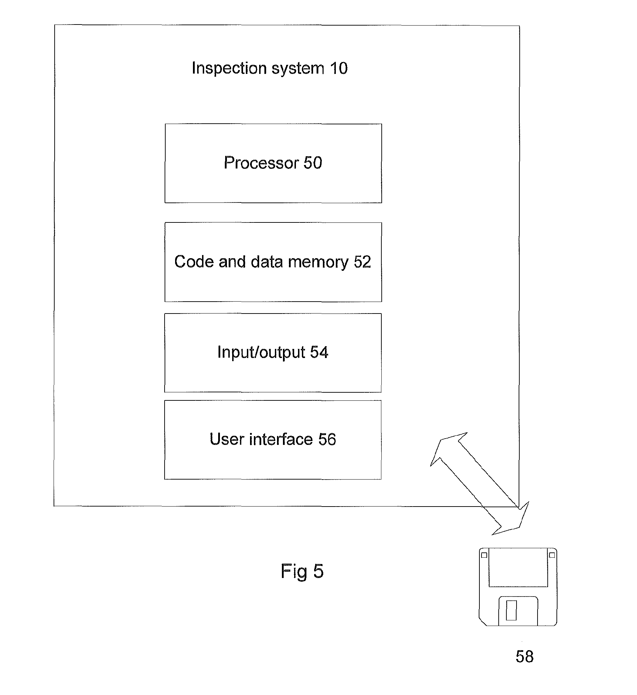

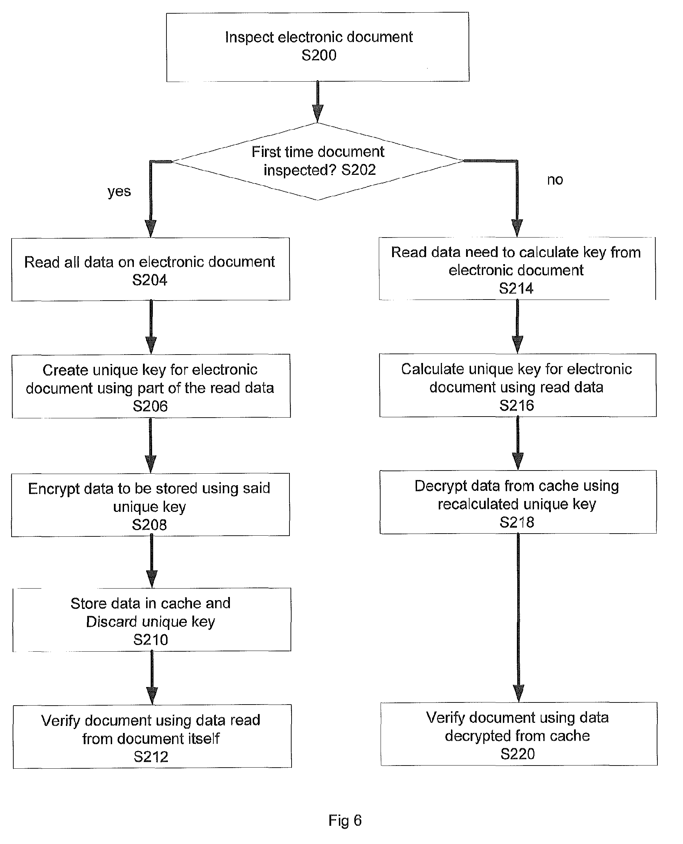

Figure 5 shows the components of the inspection system. The inspection system 10 comprises a processor 50 coupled to code and data memory 52, an input/output system 54 (for example comprising interfaces to the data cache and/or interfaces to connect to the interface on the smart chip), and to a user interface 56 for example comprising a keyboard and/or mouse. The code and/or data stored in memory 52 may be provided on a removable storage medium 58. In operation the data includes data collected from the electronic identity documents and the code comprises code to process this data to generate the data cache, retrieve data from the cache and/or verify the document in accordance with the procedure shown in Figure 6, described below.

Figure 6 shows a flow chart of the various methods using the systems described above. At step S200, an electronic document is inspected by the system and the system determines whether or not this is the first time a document has been inspected at step 202. If this is the first time that the system has seen this document, a secure data cache is created as set out in steps S204 to S210. At step S204, all the data which is to be stored in the data cache is read. At step S206, a unique key for the data to be stored is created using part of the read data, e.g. using the document summary. The data to be stored is then encrypted with this unique key at S208. The encrypted data is stored in a data cache at step S210 and the unique key is discarded by the system. As explained previously, thereafter the data in the cache may only be retrieved when the system is in the presence of the original electronic document.

If the system has previously seen the document (and stored information from the document in the data cache), at step S214, only the data required to recalculate the unique key is read from the document. At step S216, the unique key is calculated from this read data and at step S218, the data in the data cache is decrypted using this key. Data on the electronic document is thus retrieved from the cache and not from the document, whereby the data is more quickly accessed. The method of retrieving data from the cache is thus set out in steps S214 to 218.

Steps S212 and S220 show the step of verifying the document and its holder where a document is seen for the first time or a subsequent time. At step S212, the document is verified using data read from the document itself whereas in contrast, at step S220, the document is verified using data from the cache rather than from the document itself. In both cases, the original document is still required as part of the verification process since it is not possible to access the data in the cache without the original document to calculate the unique key.

The description above describes a mechanism for securely caching smartcard data in inspection systems which read stored data from smartcards. Use of such a mechanism dramatically accelerates the speed of inspecting returning documents by replacing the data transfer phase from the smartcard with a lookup from the cache. Due to the specific security features of the mechanism, the cache does not create a security or privacy risk. The mechanism works by encrypting the cached data under a key derived from high-entropy data stored on the document, and then throwing away the key, so that the cache entry can only be decrypted in the presence of the real document.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A method of securely caching data stored in an electronic identity document (32), the method comprising:
reading biometric data (34) from said electronic document,
using all or part of said biometric data to calculate a unique cryptographic key for said data;
encrypting all or part of said biometric data with said unique cryptographic key;
discarding said unique cryptographic key after encryption and
caching said encrypted biometric data in a data cache, with decryption of encrypted data requiring the presence of said electronic identity document to recalculate said unique cryptographic key from said electronic identity document.

2. A method according to claim 1, wherein said electronic identity document comprises summary data and the method comprises using all or part of said summary data to calculate a unique cryptographic key for said biometric data.

3. A method according to claim 2, wherein said biometric data comprises facial information and/or fingerprint data and the method comprises using all or part of said summary data to calculate a unique cryptographic key for said facial information and/or fingerprint data.

4. A method according to claim 2 or claim 3, wherein said electronic identity document comprises digitally signed data and biometric data in the form of an image and the method comprises calculating a unique cryptographic key for said image using part of said image and said digitally signed data.

5. A method according to any one of the preceding claims, comprising storing said encrypted data in the cache under an anonymous identifier whereby said data is not personally identifiable in the cache.

6. A method of retrieving biometric data stored as encrypted data in a secure data cache, wherein said encrypted data has been created by carrying out the method of any one of the preceding claims 1 to 5, the method of retrieving data comprising:
reading some biometric data from an electronic identity document;
using all or part of said read biometric data to recalculate a unique cryptographic key for said encrypted data; and
retrieving biometric data stored as encrypted data in a secure cache created using the method of any one of the preceding claims 1 to 5 by looking up said encrypted data in said secure data cache and decrypting said looked up encrypted data using said recalculated unique cryptographic key.

7. A method of verifying an electronic identity document, the method comprising:
creating a secure data cache by carrying out the method of any one of claims 1 to 5;
carrying out the method of claim 6 to retrieve biometric data, whereby the step of claim 6 of retrieving biometric data stored as encrypted data in a secure data cache is applied to said created secure data cache; and
verifying said electronic identity document using said retrieved biometric data.

8. A carrier carrying processor control code to, when running, implement the method of any one of claims 1 to 7.

9. A caching system for providing a secure data cache (18, 101, 102, 103) for biometric data stored in an electronic identity document, the caching system comprising:
an input configured to receive biometric data to be cached from an electronic identity document;
a processor (28) configured to
use all or part of said received biometric data to calculate a unique cryptographic key for said biometric data;
encrypt all or part of said biometric data with said unique cryptographic key; and
discard said unique cryptographic key after encryption and
an output configured to send said encrypted biometric data to a data cache, with decryption of encrypted data requiring the presence of said electronic document to recalculate said unique cryptographic key from said electronic identity document whereby said data cache is secure.

10. A caching system according to claim 9, wherein said biometric data comprises facial information and said system provides a secure data cache for said facial information.

11. A caching system according to claim 9 or claim 10, wherein said biometric data comprises fingerprint data and said system provides a secure data cache for said fingerprint data.

12. A data retrieval system for retrieving biometric data stored as encrypted biometric data in a secure data cache created by the caching system of any one of claims 9 to 11, the data retrieval system comprising:
an inspection system (10) for reading some biometric data from an electronic identity document; and
a processor configured to:
use all or part of said read biometric data to recalculate a unique cryptographic key for said data;
look up encrypted biometric data from said secure data cache; and
decrypt said looked up encrypted biometric data using said recalculated unique cryptographic key to obtain biometric data.

13. A verification system for verifying an electronic identity document, the verification system comprising:
a secure data cache (18, 101, 102, 103) created by the caching system according to any one of claims 9 to 11;
a data retrieval system according to claim 12 for retrieving biometric data; and
verification means configured to verify said electronic identity document using biometric data retrieved by said data retrieval system.

14. A verification system according to claim 13 in the form of a handheld device.

15. A verification system according to claim 13 or claim 14 wherein said secure data cache (102, 103) is remote from said processor and said verification system comprises a wireless connection between said processor and said secure data cache.

## Patentansprüche

1. Verfahren zum sicheren Zwischenspeichern von in einem elektronischen Identitätsdokument (32) gespeicherten Daten, wobei das Verfahren umfasst:
Lesen biometrischer Daten (34) aus dem elektronischen Dokument,
Verwenden aller oder eines Teils der biometrischen Daten, um einen eindeutigen Verschlüsselungsschlüssel für die Daten zu berechnen;
Verschlüsseln aller oder eines Teils der biometrischen Daten mit dem eindeutigen Verschlüsselungsschlüssel;
Beseitigen des eindeutigen Verschlüsselungsschlüssels nach der Verschlüsselung und
Zwischenspeichern der verschlüsselten biometrischen Daten in einem Daten-Cache, wobei eine Entschlüsselung von verschlüsselten Daten das Vorhandensein des elektronischen Identitätsdokuments zur Neuberechnung des eindeutigen Verschlüsselungsschlüssels aus dem Identitätsdokument erfordert.

2. Verfahren nach Anspruch 1, wobei das elektronische Identitätsdokument zusammenfassende Daten aufweist und das Verfahren umfasst: Verwenden aller oder eines Teils der zusammenfassenden Daten um einen eindeutigen Verschlüsselungsschlüssel für die biometrischen Daten zu berechnen.

3. Verfahren nach Anspruch 2, wobei die biometrischen Daten Gesichtsinformations- und/oder Fingerabdruckdaten umfassen und das Verfahren umfasst: Verwenden aller oder eines Teils der zusammenfassenden Daten, um einen eindeutigen Verschlüsselungsschlüssel für die Gesichtsinformations- und/oder Fingerabdruckdaten zu berechnen.

4. Verfahren nach Anspruch 2 oder 3, wobei das elektronische Identitätsdokument digital signierte Daten und biometrische Daten in Form eines Bildes umfasst und das Verfahren umfasst: Berechnen eines eindeutigen Verschlüsselungsschlüssels für das Bild unter Verwendung eines Teils des Bildes und der digital signierten Daten.

5. Verfahren nach einem der vorhergehenden Ansprüche, umfassend: Speichern der verschlüsselten Daten im Cache unter einer anonymen Kennung, wodurch die Daten im Cache nicht persönlich identifizierbar sind.

6. Verfahren zum Abrufen biometrischer Daten, die als verschlüsselte Daten in einem sicheren Daten-Cache gespeichert sind, wobei die verschlüsselten Daten durch Ausführen des Verfahrens nach einem der vorhergehenden Ansprüche 1 bis 5 erstellt worden sind, wobei das Verfahren zum Abrufen von Daten umfasst:
Lesen einiger biometrischer Daten aus einem elektronischen Identitätsdokument;
Verwenden aller oder eines Teils der gelesenen biometrischen Daten, um einen eindeutigen Verschlüsselungsschlüssel für die verschlüsselten Daten neu zu berechnen; und
Abrufen biometrischer Daten, die als verschlüsselte Daten in einem sicheren Cache gespeichert sind, der unter Verwendung des Verfahrens nach einem der vorhergehenden Ansprüche 1 bis 5 erstellt ist, durch Aufsuchen der verschlüsselten Daten in dem sicheren Daten-Cache und Entschlüsseln der aufgesuchten verschlüsselten Daten unter Verwendung des neu berechneten eindeutigen Verschlüsselungsschlüssels.

7. Verfahren zum Überprüfen eines elektronischen Identitätsdokuments, wobei das Verfahren umfasst:
Erstellen eines sicheren Daten-Caches durch Ausführen des Verfahrens nach einem der Ansprüche 1 bis 5;
Ausführen des Verfahrens nach Anspruch 6, um biometrische Daten abzurufen, wobei der Schritt in Anspruch 6 zum Abrufen biometrischer Daten, die als verschlüsselte Daten in einem sicheren Daten-Cache gespeichert sind, auf den erstellten sicheren Daten-Cache angewendet werden; und
Überprüfen des elektronischen Identitätsdokuments unter Verwendung der abgerufenen biometrischen Daten.

8. Träger, der Prozessorsteuercode trägt, der bei Ausführung das Verfahren nach einem der Ansprüche 1 bis 7 implementiert.

9. Zwischenspeicherungssystem zum Bereitstellen eines sicheren Daten-Caches (18, 101, 102, 103) für in einem elektronischen Identitätsdokument gespeicherte biometrische Daten, wobei das Zwischenspeicherungssystem umfasst:
einen Eingang, der dafür konfiguriert ist, biometrische Daten zur Zwischenspeicherung von einem elektronischen Identitätsdokument zu empfangen;
einen Prozessor (28), der für Folgendes konfiguriert ist:
Verwenden aller oder eines Teils der empfangenen biometrischen Daten, um einen eindeutigen Verschlüsselungsschlüssel für die biometrischen Daten zu berechnen;
Verschlüsseln aller oder eines Teils der biometrischen Daten mit dem eindeutigen Verschlüsselungsschlüssel; und
Beseitigen des eindeutigen Verschlüsselungsschlüssels nach der Verschlüsselung, und
einen Ausgang, der dafür konfiguriert ist, die verschlüsselten biometrischen Daten an einen Daten-Cache zu senden, wobei die Entschlüsselung von verschlüsselten Daten das Vorhandensein des elektronischen Dokuments zur Neuberechnung des eindeutigen Verschlüsselungsschlüssels aus dem elektronischen Identitätsdokument erfordert, wodurch der Daten-Cache sicher ist.

10. Zwischenspeicherungssystem nach Anspruch 9, wobei die biometrischen Daten Gesichtsinformation aufweisen und das System einen sicheren Daten-Cache für die Gesichtsinformation bereitstellt.

11. Zwischenspeicherungssystem nach Anspruch 9 oder 10, wobei die biometrischen Daten Fingerabdruckdaten umfassen und das System einen sicheren Daten-Cache für die Fingerabdruckdaten bereitstellt.

12. Datenabrufsystem zum Abrufen biometrischer Daten, die als verschlüsselte biometrischen Daten in einem sicheren Daten-Cache gespeichert sind, der durch das Zwischenspeicherungssystem nach einem der Ansprüche 9 bis 11 erstellt ist, wobei das Datenabrufsystem umfasst:
ein Inspektionssystem (10) zum Lesen einiger biometrischer Daten aus einem elektronischen Identitätsdokument; und
einen Prozessor, der für Folgendes konfiguriert ist:
Verwenden aller oder eines Teils der gelesenen biometrischen Daten, um einen eindeutigen Verschlüsselungsschlüssel für die Daten neu zu berechnen;
Aufsuchen verschlüsselter biometrischer Daten aus dem sicheren Daten-Cache; und
Entschlüsseln der aufgesuchten verschlüsselten Daten unter Verwendung des neu berechneten eindeutigen Verschlüsselungsschlüssels zur Beschaffung biometrischer Daten.

13. Überprüfungssystem zum Überprüfen eines elektronischen Identitätsdokuments, wobei das Überprüfungssystem umfasst:
einen sicheren Daten-Cache (18, 101, 102, 103), der durch das Zwischenspeicherungssystem nach einem der Ansprüche 9 bis 11 erstellt wird;
ein Datenabrufsystem nach Anspruch 12 zum Abrufen biometrischer Daten; und
ein Überprüfungsmittel, das dafür konfiguriert ist, das elektronische Identitätsdokument unter Verwendung von durch das Datenabrufsystem abgerufenen biometrischen Daten zu überprüfen.

14. Überprüfungssystem nach Anspruch 13 in Form eines Handgeräts.

15. Überprüfungssystem nach Anspruch 13 oder 14, wobei der sichere Daten-Cache (102, 103) sich von dem Prozessor entfernt befindet und das Überprüfungssystem eine drahtlose Verbindung zwischen dem Prozessor und dem sicheren Daten-Cache umfasst.

## Revendications

1. Procédé de mise en mémoire cache sécurisée de données stockées dans un document d'identité électronique (32), le procédé comprenant les étapes ci-dessous consistant à :
lire des données biométriques (34) à partir dudit document électronique ;
utiliser tout ou partie desdites données biométriques en vue de calculer une clé de chiffrement unique pour lesdites données ;
chiffrer tout ou partie desdites données biométriques au moyen de ladite clé de chiffrement unique ;
rejeter ladite clé de chiffrement unique à l'issue du chiffrement ; et
mettre en mémoire cache lesdites données biométriques chiffrées dans une mémoire cache de données, où un déchiffrement des données chiffrées nécessite la présence dudit document d'identité électronique en vue de recalculer ladite clé de chiffrement unique à partir dudit document d'identité électronique.

2. Procédé selon la revendication 1, dans lequel ledit document d'identité électronique comprend des données récapitulatives et dans lequel le procédé comprend l'étape consistant à utiliser tout ou partie desdites données récapitulatives en vue de calculer une clé de chiffrement unique pour lesdites données biométriques.

3. Procédé selon la revendication 2, dans lequel lesdites données biométriques comportent des informations faciales et/ou des données d'empreintes digitales, et dans lequel le procédé comprend l'étape consistant à utiliser tout ou partie desdites données récapitulatives en vue de calculer une clé de chiffrement unique pour lesdites informations faciales et/ou lesdites données d'empreintes digitales.

4. Procédé selon la revendication 2 ou 3, dans lequel ledit document d'identité électronique comprend des données signées numériquement et des données biométriques sous la forme d'une image, et dans lequel le procédé comprend l'étape consistant à calculer une clé de chiffrement unique pour ladite image, en utilisant une partie de ladite image et lesdites données signées numériquement.

5. Procédé selon l'une quelconque des revendications précédentes, comprenant l'étape consistant à stocker lesdites données chiffrées dans la mémoire cache, sous un identifiant anonyme, moyennant quoi lesdites données ne sont pas personnellement identifiables dans la mémoire cache.

6. Procédé de récupération de données biométriques stockées sous forme de données chiffrées dans une mémoire cache de données sécurisée, dans lequel lesdites données chiffrées ont été créées en mettant en oeuvre le procédé selon l'une quelconque des revendications 1 à 5, le procédé de récupération de données comprenant les étapes ci-dessous consistant à :
lire certaines données biométriques à partir d'un document d'identité électronique ;
utiliser tout ou partie desdites données biométriques lues en vue de recalculer une clé de chiffrement unique pour lesdites données chiffrées ; et
récupérer des données biométriques stockées sous forme de données chiffrées dans une mémoire cache sécurisée créée en utilisant le procédé selon l'une quelconque des revendications précédentes 1 à 5, en consultant lesdites données chiffrées dans ladite mémoire cache de données sécurisée et en déchiffrant lesdites données chiffrées consultées au moyen de ladite clé de chiffrement unique recalculée.

7. Procédé de vérification d'un document d'identité électronique, le procédé comprenant les étapes ci-dessous consistant à :
créer une mémoire cache de données sécurisée en mettant en oeuvre le procédé selon l'une quelconque des revendications 1 à 5 ;
mettre en oeuvre le procédé selon la revendication 6 en vue de récupérer des données biométriques, moyennant quoi l'étape selon la revendication 6 de récupération de données biométriques stockées sous forme de données chiffrées dans une mémoire cache de données sécurisée est appliquée à ladite mémoire cache de données sécurisée créée ; et
vérifier ledit document d'identité électronique en utilisant lesdites données biométriques récupérées.

8. Support portant un code de commande de processeur pour, lorsqu'il est exécuté, mettre en oeuvre le procédé selon l'une quelconque des revendications 1 à 7.

9. Système de mise en mémoire cache destiné à fournir une mémoire cache de données sécurisée (18, 101, 102, 103) pour des données biométriques stockées dans un document d'identité électronique, le système de mise en mémoire cache comprenant :
une entrée configurée de manière à recevoir des données biométriques devant être mises en mémoire cache à partir d'un document d'identité électronique ;
un processeur (28) configuré de manière à :
utiliser tout ou partie desdites données biométriques reçues en vue de calculer une clé de chiffrement unique pour lesdites données biométriques ;
chiffrer tout ou partie desdites données biométriques au moyen de ladite clé de chiffrement unique ;
rejeter ladite clé de chiffrement unique à l'issue du chiffrement ; et
une sortie configurée de manière à envoyer lesdites données biométriques chiffrées à une mémoire cache de données, où un déchiffrement des données chiffrées nécessite la présence dudit document d'identité électronique en vue de recalculer ladite clé de chiffrement unique à partir dudit document d'identité électronique, moyennant quoi ladite mémoire cache de données est sécurisée.

10. Système de mise en mémoire cache selon la revendication 9, dans lequel lesdites données biométriques comportent des informations faciales et dans lequel ledit système fournit une mémoire cache de données sécurisée pour lesdites informations faciales.

11. Système de mise en mémoire cache selon la revendication 9 ou 10, dans lequel lesdites données biométriques comportent des données d'empreintes digitales et dans lequel ledit système fournit une mémoire cache de données sécurisée pour lesdites données d'empreintes digitales.

12. Système de récupération de données destiné à récupérer des données biométriques stockées sous forme de données biométriques chiffrées dans une mémoire cache de données sécurisée créée par le système de mise en mémoire cache selon l'une quelconque des revendications 9 à 11, le système de récupération de données comprenant :
un système d'inspection (10) destiné à lire certaines données biométriques à partir d'un document d'identité électronique ; et
un processeur configuré de manière à :
utiliser tout ou partie desdites données biométriques lues en vue de recalculer une clé de chiffrement unique pour lesdites données ;
consulter des données biométriques chiffrées à partir de ladite mémoire cache de données sécurisée ; et
déchiffrer lesdites données biométriques chiffrées consultées, en moyen de ladite clé de chiffrement unique recalculée, en vue d'obtenir des données biométriques.

13. Système de vérification destiné à vérifier un document d'identité électronique, le système de vérification comprenant :
une mémoire cache de données sécurisée (18, 101, 102, 103) créée par le système de mise en mémoire cache selon l'une quelconque des revendications 9 à 11 ;
un système de récupération de données selon la revendication 12, destiné à récupérer des données biométriques ; et
un moyen de vérification configuré de manière à vérifier ledit document d'identité électronique en utilisant des données biométriques récupérées par ledit système de récupération de données.

14. Système de vérification selon la revendication 13, sous la forme d'un dispositif portatif.

15. Système de vérification selon la revendication 13 ou 14, dans lequel ladite mémoire cache de données sécurisée (102, 103) est distante dudit processeur, et ledit système de vérification comprend une connexion sans fil entre ledit processeur et ladite mémoire cache de données sécurisée.
